# EUROPÄISCHE PATENTSCHRIFT

(11) **EP 1 654 133 B1**
(45) Veröffentlichungstag und Bekanntmachung des Hinweises auf die Patenterteilung: **07.10.2009**
(21) Anmeldenummer: 04762478.8
(22) Anmeldetag: 22.07.2004
(51) Int. Cl.: B60J 3/02, B60J 3/04

(54) **BLENDSCHUTZSYSTEM FÜR EIN FAHRZEUG**
ANTIDAZZLE SYSTEM FOR A VEHICLE
SYSTEME ANTI-EBLOUISSEMENT POUR UN VEHICULE

(30) Priorität: 04.08.2003 DE 10335600; 17.02.2004 DE 102004007521
(43) Veröffentlichungstag der Anmeldung: 10.05.2006
(60) Teilanmeldung: 06119276.1
(73) Patentinhaber: ROBERT BOSCH GMBH, 70442 Stuttgart (DE)
(72) Erfinder: BOTHE, Hans-Dieter, 30926 Seelze (DE); TRINH, Hoang, 31134 Hildesheim (DE); FREIENSTEIN, Heiko, 31141 Hildesheim (DE); ENGELBERG, Thomas, 31137 Hildesheim (DE); WELLHÖFER, Matthias, 70499 Stuttgart (DE); MARCHTHALER, Reiner, 73333 Gingen (DE)
(86) Internationale Anmeldenummer: PCT/DE2004/001628
(87) Internationale Veröffentlichungsnummer: WO 2005/014319

(56) Entgegenhaltungen:
- DE-A- 19 824 084
- DE-A- 19 933 397
- US-A- 5 305 012
- US-A- 5 714 751
- US-A1- 2004 012 762
- PATENT ABSTRACTS OF JAPAN Bd. 017, Nr. 008 (M-1350), 7. Januar 1993 (1993-01-07) -& JP 04 238724 A (OKI ELECTRIC IND CO LTD), 26. August 1992 (1992-08-26)

## Beschreibung

### Stand der Technik

Die Erfindung geht aus von einem Blendschutzsystem für ein Fahrzeug nach der Gattung des unabhängigen Patentanspruchs.

Aus DE 100 12 749 A1 ist eine Einrichtung zur Ansteuerung eines Blendschutzes bekannt, die den Blendschutz in Abhängigkeit von einer Beleuchtung des Gesichts eines Fahrzeuginsassen ansteuert.

Aus DE 198 24 084 A1 ist eine Blendschutzeinrichtung mit einer abdunkelbaren Filterscheibe bekannt. Die Augenposition des Fahrers oder des Beifahrers wird mit einer Kamera erfasst, die im Innenraum des Fahrzeugs angeordnet ist. Mit Hilfe von weiteren Sensoren wird die Lichtintensität des Blendobjekts bestimmt.

### Vorteile der Erfindung

Die erfindungsgemäße Einrichtung zur Ansteuerung eines Blendschutzes in einem Fahrzeug mit den Merkmalen des unabhängigen Patentanspruchs hat demgegenüber den Vorteil, dass nunmehr die Kopfposition und damit die Pose des Fahrzeuginsassen bei der Ansteuerung des Blendschutzes berücksichtigt wird. Zusätzlich wird vorteilhaft eine Gesichtsverdeckung berücksichtigt werden. Diese Gesichtsverdeckung wird in den meisten Fällen eine Sonnenbrille sein, die dazu führt, dass der Blendschutz nicht angesteuert wird, da der Fahrzeuginsasse durch die Verwendung der Sonnenbrille bereits ausreichend vor Blendung geschützt ist. Unter Blendschutz wird hier ein mechanischer Blendschutz, wie beispielsweise ein Rollo oder eine Jalousie verstanden, die bei Betätigung mehr oder weniger weit entrollt werden, dadurch die Scheiben des Fahrzeugs mehr oder weniger bedecken und auf diese Weise eine Blendung wenigstens reduzieren. Ein Blendschutz im Sinne der Erfindung schließt aber auch in die Scheiben selbst integrierte Mittel ein. Beispielsweise gehört dazu ein elektrochromatisches Glas, bei dem durch Anlegen einer Spannung dessen Transmissionseigenschaften geändert werden können. Das Glas kann dadurch abgedunkelt werden, wodurch eine störende Blendung der Fahrzeuginsassen wenigstens vermindert wird. Insbesondere wird unter einem Blendschutz verstanden, dass die unterschiedlichen Scheiben eines Fahrzeugs damit abgedunkelt werden können. Die Abdunklung kann auch unabhängig voneinander stattfinden. Wird beispielsweise festgestellt, dass die Blendung durch die Rückspiegel hervorgerufen wird, werden die entsprechenden Scheiben abgedunkelt, nicht aber jene, durch die das an dem Rückspiegel reflektierte Licht nicht eindringt. Insgesamt werden also die Fahrzeuginsassen besser gegen Blendung geschützt. Damit werden die Fahrsicherheit und der Fahrkomfort verbessert. Eine automatische Einstellung und Nachführung des Blendschutzsystems entlastet die Fahrzeuginsassen, insbesondere aber den Fahrer des Fahrzeugs. Die Verwendung von elektrochromatischem Glas oder anderen transparenten Werkstoffen mit adaptiven Transmissionseigenschaften ermöglicht die direkte und einfache Integration des Blendschutzes in alle Fahrzeugscheiben. Durch die Verwendung eines Blendschutzes wird auch die Ablesbarkeit von einem sogenannten Head-Up-Display verbessert, sofern das Fahrzeug damit ausgestattet ist. Die Messung der Helligkeit mit Photozellen kann mit der erfindungsgemäßen Einrichtung vermieden werden. Auch Sonnenblenden können so vermieden werden. Durch die Vermeidung der Sonnenblenden ergeben sich mehr Möglichkeiten für die Integration von bildgebenden Sensoren, also insbesondere die Möglichkeit einer optischen Innenraumerfassung in dem Fahrzeuginnenraum. Die Bildqualität von bildgebenden und tiefenbildgebenden Sensoren im Fahrzeuginnenraum wird durch die Unterdrückung bzw. Reduktion von externen Lichteinflüssen verbessert. Durch die Verwendung eines Blendschutzsystems in den Fahrzeugscheiben, insbesondere in Seitenscheiben, kann auf eine abblendbare Ausführung der Außenspiegel verzichtet werden. Entsprechendes gilt für die Ausführung von Innenspiegeln. Durch die in den abhängigen Ansprüchen aufgeführten Maßnahmen und Weiterbildungen sind vorteilhafte Verbesserungen des im unabhängigen Patentanspruch angegebenen Blendschutzsystems möglich. Besonders vorteilhaft ist, dass bei der Ansteuerung des Blendschutzes die Position der Augen der Fahrzeuginsassen berücksichtigt wird. Nur unter Kenntnis der aktuellen Augenposition kann nämlich ein adaptiver Blendschutz mit der größten Effizienz eingestellt werden. Auch die Aussage über eine Insassenklasse kann zur Ansteuerung des Blendschutzes genutzt werden. Weiterhin ist es von Vorteil, dass der Bildgeber zur Beobachtung der Fahrzeuginsassen ein Stereovideosensor zur Innenraumüberwachung sein kann. Insbesondere kann dann die Einrichtung mit einem Rückhaltesystem gekoppelt sein, das einen solchen Stereovideosensor verwendet, um die Fahrzeuginsassen zu erkennen und zu klassifizieren. Damit wird ein Zusatznutzen für eine Innenraumerkennung geschaffen.

Weiterhin ist es von Vorteil, dass bei der Erzeugung des Signals zur Bestimmung der Blendung eine Schattenkante identifiziert wird. Damit kann eine genaue Aussage über den Grad der Blendung gemacht werden. Außerdem können damit die Blendschutzmittel besser angesteuert werden. Auch die Lichtintensität kann hierzu verwendet werden. Zusätzlich ist es in vorteilhafter Weise möglich, dass das erste Signal auch in Abhängigkeit von der Ansteuerung des Blendschutzes erzeugt wird. Damit ist ein Regelungsmechanismus möglich, um die Auswirkungen der Ansteuerung des Blendschutzes sofort zu überwachen. Dies führt zu einer Feinregelung des Blendschutzes. In Abhängigkeit von dem Signal der Einrichtung kann auch eine Helligkeitsregelung des Bildgebers selbst vorgenommen werden. Damit wird die Qualität der Bilder, die der Bildgeber erfasst, verbessert. Zusätzlich kann bei der Ansteuerung des Blendschutzes auch ein Modell des Fahrzeuginnenraums berücksichtigt werden, um die Beleuchtungsverhältnisse bei der Einstellung des Blendschutzes zu optimieren. Bei der Ansteuerung des Blendschutzes kann auch ein Signal einer weiteren Sensorik berücksichtigt werden. Dazu zählen insbesondere Sensoren zur Messung des Lenkwinkels oder der Änderungsgeschwindigkeit des Lenkwinkels sowie Videosensoren zur Erfassung des Fahrzeugumfeldes. Auch andere Sensorentypen, die zur Umfeldsensorik gehören, sind hier möglich. Beispielsweise kann über die Fahrzeuggeschwindigkeit und über die Außenraumsensorik die Dynamik des Reglers angepasst werden, was insbesondere bei Allee- oder Tunnelfahrten von großem Vorteil ist. Die Lenkwinkelsensierung ermöglicht eine optimale Anpassung des Blendschutzes bei Kurvenfahrten.

### Zeichnung

Ausführungsbeispiele der Erfindung sind in der Zeichnung dargestellt und werden in der nachfolgenden Beschreibung näher erläutert. Es zeigen
- Figur 1: ein erstes Blockschaltbild der erfindungsgemäßen Einrichtung,
- Figur 2: ein zweites Blockschaltbild der erfindungsgemäßen Einrichtung,
- Figur 3: ein drittes Blockschaltbild der erfindungemäßen Einrichtung,
- Figur 4: ein viertes Blockschaltbild der erfindungsgemäßen Einrichtung,
- Figur 5: ein fünftes Blockschaltbild der erfindungsgemäßen Einrichtung,
- Figur 6: die Möglichkeiten des Blendschutzes und
- Figur 7: eine schematische Darstellung des elektrochromatischen Glases,

### Beschreibung

Erfindungsgemäß wird eine Einrichtung zur Ansteuerung eines Blendschutzes vorgeschlagen, die sich dadurch auszeichnet, dass sie zu einem adaptiven Schutz der Fahrzeuginsassen vor direkter und indirekter Blendung in Abhängigkeit von ihrer Klassenzugehörigkeit, z. B. erwachsene Fahrzeuginsassen oder Kind im Kindersitz, ihrer Pose, ihrer dreidimensionalen Kopfposition, ihrer dreidimensionalen Augenposition in Bezug zu Innenraumgeometrie, ihrer Augenposition im Bild und ihrer Blickrichtung sowie in Abhängigkeit von der Intensität des blendenden Lichts und der geblendeten Bereiche führt. Bei einer automatischen Einstellung und Nachführung des Blendschutzsystems können die von optischen bildgebenden und aktiven bildgebenden Sensoren bereitgestellten Funktionen z. B. Detektion, Lokalisierung und Tracking von Insassenköpfen und ihrer Augen, für die Sitzbelegungsklassifikation und die Bestimmung der Insassenpose genutzt werden, wobei diese Daten unter anderem auch für die adaptive Ansteuerung von Kfz-Rückhaltesystemen bereitgestellt werden. Durch eine geeignete Einstellung des Blendschutzsystems können die Lichtverhältnisse im Fahrzeuginnenraum wiederum für die oben genannten optischen bildgebenden und tiefenbildgebenden Sensoren optimal angepasst werden.

Die Erfindung ermöglicht bei Verwendung von Glas oder transparenten Werkstoffen mit einstellbaren Transmissionseigenschaften, die in die Fahrzeugscheiben integriert werden können, z. B. elektrochromatisches Glas eine gute Ablesbarkeit von Head-Up-Displays im Fahrzeug, z. B. auf der Frontscheibe unabhängig vom Lichteinfall und für beliebige Posen, Kopfpositionen und Blickrichtungen der Fahrzeuginsassen.

Die Erfindung ermöglicht den Ersatz konventioneller Sonnenblenden durch neue Blendschutzsysteme, die in die Fahrzeugscheiben integriert werden können und deren Transmissionseigenschaften einstellbar sind oder die als bewegbare Rollos oder Jalousien ausgebildet sind.

Die Erfindung betrifft im allgemeinen Fall auch den Blendschutz aller Fahrzeugscheiben, d. h. neben der Frontscheibe auch die Seitenscheibe, die Heckscheibe und gegebenenfalls die Sonnendachscheibe.

Insbesondere kann der Blendschutz, z. B. Glas mit adaptiven Transmissionseigenschaften graduell bzw. schrittweise von ganz durchsichtig bis halb durchsichtig eingestellt werden, wobei die Sichtbarkeit auf die Straße immer gewährleistet werden muss. Außerdem kann der Blendschutz aus vielen einzelnen Schutzelementen bestehen, die jeweils einzeln angesteuert werden können.

Außerdem kann der Blendschutz neben der automatischen Einstellung und Nachführung auch auf manuelle Betätigung mit geeigneten Bedienelementen, beispielsweise über einen Schalter umgeschaltet werden.

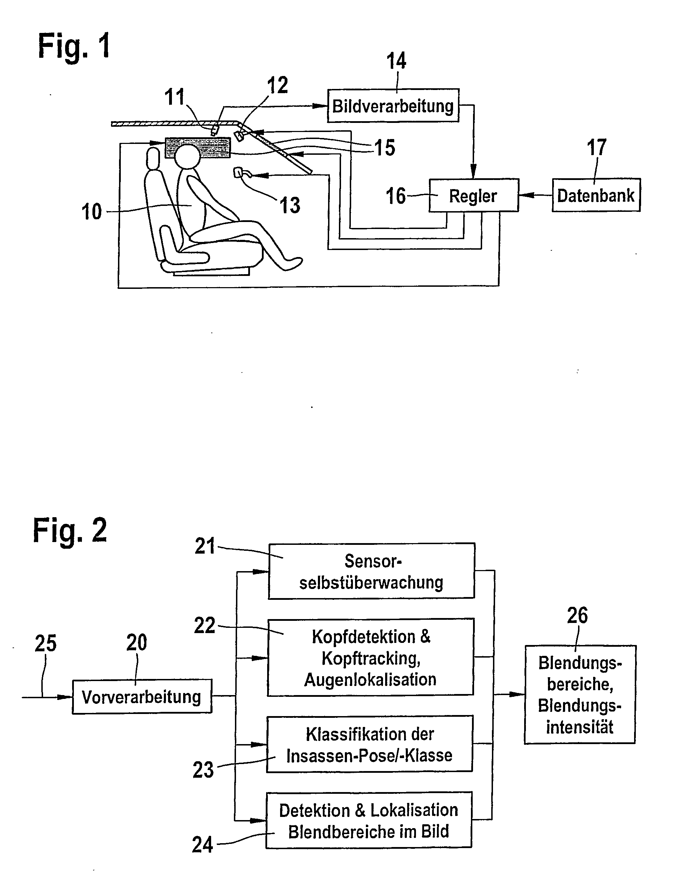

Figur 1 zeigt ein erstes Blockschaltbild der erfindungsgemäßen Einrichtung. Eine Fahrzeuginsasse 10 auf einem Fahrzeugsitz wird über einen bildgebenden Sensor 11 erfasst, wobei insbesondere die Augenposition und die dreidimensionale Kopfposition, also die Pose des Fahrzeuginsassen, erfasst werden. Um den Blendschutz zu bestimmen, wird die Lichtintensität auf dem Gesicht des Fahrzeuginsassen 10 erfasst. Zur Blendung kann nicht nur direktes Licht von vorne oder von der Seite führen, sondern auch indirektes Licht über einen Rückspiegel 12 und die Außenspiegel 13. Zum Schutz vor Blendung weist das Fahrzeug einen adaptiven Blendschutz 15 in der Fahrzeugscheibe auf. Der adaptive Blendschutz 15 wird durch einen Regler 16 angesteuert, der die Ansteuerung in Abhängigkeit von einem Signal von einer Bildverarbeitung 14 ausführt, die wiederum die Signale des bildgebenden Sensors 11 verarbeitet. Der Regler 16 erhält von der Bildverarbeitung 14 Aussagen über den Sensorstatus, die Insassenklasse, die Insassenpose, die Kopfposition, die Augenposition, die Blickrichtung der Fahrzeuginsasse, Blendungsbereiche und Blendungsintensitäten. Zusätzlich verwendet der Regler 16 Daten aus einer Datenbank 17, das sind Parametersätze und Kennlinien zur Ansteuerung des Blendschutzsystems. Die Bildverarbeitung 14, der Regler 16 und die Datenbank 17 können alle in einem Steuergerät im Fahrzeug integriert sein.

Der bildgebende Sensor 11 ist hier ein Videosensor, der den Kfz-Innenraum weitwinklig erfasst. Damit sind nicht nur die Vordersitze erfassbar, sondern auch optional die Rücksitze. Auch die für die Blendung gegebenenfalls relevanten Seitenscheiben sowie die Innen- und Außenspiegel können sich im Erfassungsbereich des Sensors 11 befinden. Die vom Sensor 11 gelieferten Bilder werden als Eingangsgrößen dem Bildverarbeitungsblock 14 zugeführt. Im Bildverarbeitungsblock 14 werden die Algorithmen realisiert, die für die erfindungsgemäße Ansteuerung des Blendschutzsystems erforderlich sind. Im Wesentlichen sind dies die folgenden Algorithmen. Eine Bildvorverarbeitung, eine Klassifikation der Insassen in ihrer Pose, eine Detektion, Lokalisation und Tracking von Köpfen, eine Augenlokalisation sowie eine Sensorselbstüberwachung. Zusätzlich sind eine Detektion, eine Lokalisation der Blendungsbereiche sowie eine Ermittlung der Intensität in diesen Blendungsbereichen vorgesehen. Z. B. ist dies mit Verfahren möglich, die über- bzw. unterbelichteten Bildbereiche zu detektieren und zu lokalisieren. Dazu gehört die Lokalisation von Schattenkanten, die Messung der absoluten Intensität sowie die Kombination dieser beiden Parameter und auch die Auswirkung von geringen Veränderungen der Sonnenblende bzw. des Blendschutzes und eine entsprechende Verfolgung der Bestätigung bzw. Reaktion der Bewegung der Schattenkante.

Die Ausgangsgrößen des Bildverarbeitungsblocks 14 sind im wesentlichen die Insassenklasse und die Insassenpose, die Kopfposition, die Augenposition und die Blickrichtungen der Insassen, im einfachsten Fall jedoch nur die des Fahrers, die Blendungsbereiche und die Blendungsintensität sowie der Sensorstatus. Die oben genannten Ausgangsgrößen des Bildverarbeitungsblocks 14 sowie Parametersätze und Kennlinien aus einer Datenbank 17 bilden die Eingangsgrößen des Reglers 16, der die Einstellung bzw. Nachführung der Aktorik 15 des Blendschutzsystems übernimmt. Im Wesentlichen sind dies der adaptive Blendschutz an den Fahrzeugscheiben, z. B. Fahrzeugscheiben aus elektrochromatischen Glas, Jalousien bzw. Rollos, abblendbare Spiegel, z. B. Spiegel aus elektrochromatischem Glas. Besteht der Blendschutz aus elektrochromatischem Glas, so werden durch das Anlegen einer Spannung dessen Transmissionseigenschaften geändert, d. h., das Glas kann z. B. dadurch abgedunkelt werden. In Figur 1 ist exemplarisch der Blendschutz an der Front- und an der Seitenscheibe dargestellt. Prinzipiell können aber auch alle anderen Fahrzeugscheiben damit ausgerüstet sein.

Zusätzlich zur Blendschutzregelung kann auch eine Helligkeitsregelung des bildgebenden Sensors realisiert werden, um dessen Bildqualität zu verbessern.

Figur 2 zeigt ein weiteres Blockschaltbild der erfindungsgemäßen Einrichtung. Die Stereobilder 25 des bildgebenden Sensors 11 werden der Vorverarbeitung 20 zugeführt. Aus dem Signal der Vorverarbeitung 20 werden parallel mehrere Aufgaben erledigt. Es findet eine Sensorselbstüberwachung 21 statt, es wird eine Kopfdetektion bzw. ein Kopftracking und eine Augenlokalisation 22 durchgeführt, es erfolgt eine Klassifikation der Insassen- bzw. Posenklasse, und es erfolgt im Block 24 eine Detektion und Lokalisation der Blendbereiche im Bild. Daraus kommt es dann zu einem Vektor mit verschiedenen Daten. Dieser Vektor 26 umfasst den Sensorstatus aus der Sensorselbstüberwachung 21, die Insassenklasse, die Insassenpose, die Kopfposition bzw. Augenposition, die Blickrichtung der Fahrzeuginsasse, Blendungsbereiche und Blendungsintensitäten.

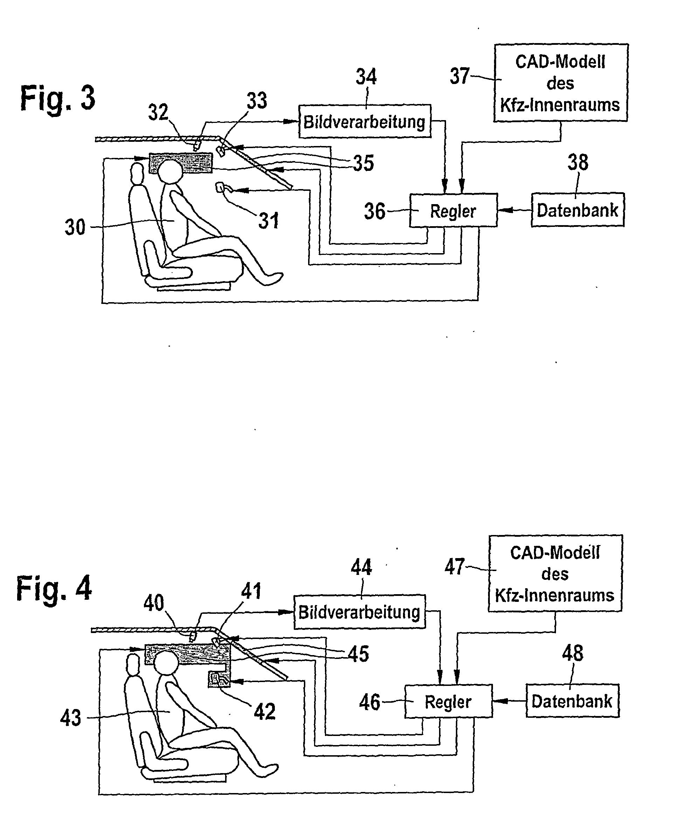

Figur 3 zeigt ein drittes Blockschaltbild der erfindungsgemäßen Einrichtung. Eine Fahrzeuginsasse 30 auf einem Fahrzeugsitz wird von einem bildgebenden Sensor 32 überwacht. Die Fahrzeuginsasse 30 sieht einen Außenspiegel 31 und einen Rückspiegel 33. Zum Blendschutz der Fahrzeuginsasse 30 ist ein adaptiver Blendschutz an den Fahrzeugscheiben 35 vorgesehen. Die Signale des bildgebenden Sensors 32 werden von einer Bildverarbeitung 34 verarbeitet, die daraus den Sensorstatus, die Insassenklasse, die Insassenposition, die Kopfposition, die Augenposition, die Blickrichtung der Fahrzeuginsasse, Blendungsbereiche und Blendungsintensitäten bestimmt. Diese Daten werden einem Regler 36 zugeführt, der zusätzlich ein CAD-Modell des Kfz-Innenraums 37 und Daten von einer Datenbank 38 berücksichtigt. Zu diesen Daten gehören Parametersätze sowie Kennlinien zur Ansteuerung des Blendschutzsystems. In Abhängigkeit davon steuert dann der Regler 36 dem Blendschutz 35 an, wozu auch der Blendschutz bezüglich der Außenspiegel und der Rückspiegel gehört. Das CAD-Modell 47 führt zu einer verbesserten Anpassung der Regelung des Blendschutzsystems an die Innenraumgeometrie.

Figur 4 zeigt ein weiteres Blockschaltbild der erfindungsgemäßen Einrichtung. Eine Fahrzeuginsasse 43 auf einem Fahrzeugsitz wird wiederum von einem bildgebenden Sensor 40 überwacht, wobei die Fahrzeuginsasse 43 wiederum einen Rückspiegel 41 und Außenspiegel 42 sieht. Zum Schutz der Fahrzeuginsassen 43 ist wiederum ein adaptiver Blendschutz an den Fahrzeugscheiben 45 vorgesehen. Die Signale des bildgebenden Sensors 40 werden von einer Bildverarbeitung 44 verarbeitet. Der Ergebnisvektor setzt sich aus dem Sensorstatus, der Insassenklasse, der Insassenpose, der Kopfposition, der Augenposition, der Blickrichtung der Fahrzeuginsasse, Blendungsbereiche sowie Blendungsintensitäten zusammen. Diese Daten werden einem Regler 46 zugeführt, der den adaptiven Blendschutz 45 ansteuert. Zusätzlich verwendet jedoch der Regler 46 ein CAD-Modell des Kfz-Innenraums 47 und die Daten der Datenbank 48, die wiederum die Parametersätze und die Kennlinien zur Ansteuerung des Blendungsschutzsystems umfassen. Hier ist der Blendschutz derart ausgebildet, dass eine indirekte Blendung der Fahrzeuginsassen über die Spiegel verhindert wird, in dem die relevanten Bereiche der Fahrzeugscheiben entsprechend abgedunkelt werden. In diesem Fall können einfache nicht abblendbare Spiegel verwendet werden.

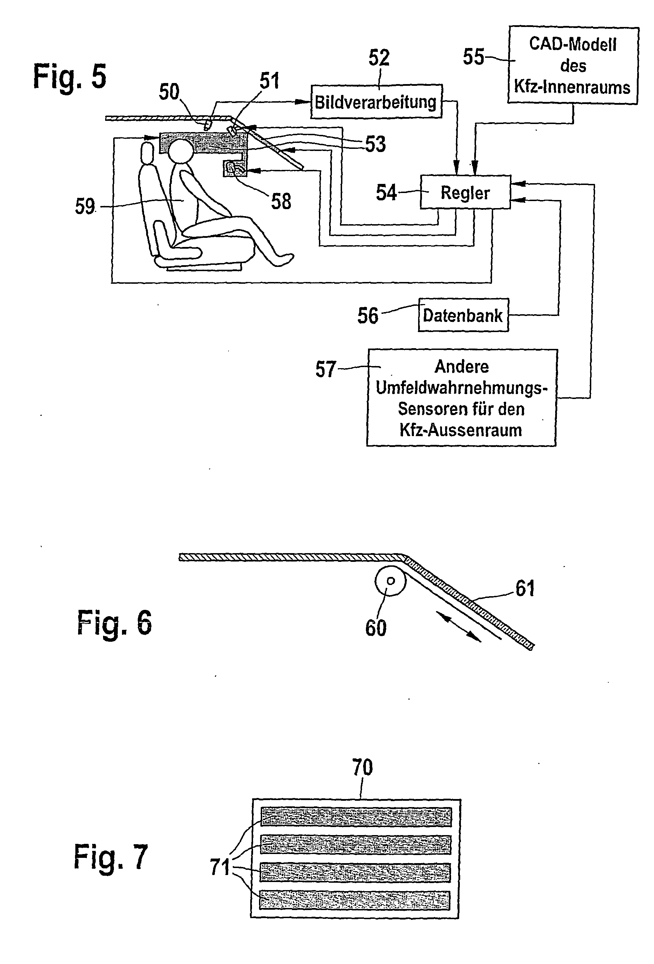

In Figur 5 ist ein fünftes Blockschaltbild der erfindungsgemäßen Einrichtung dargestellt. Eine Fahrzeuginsasse 59 wird von einem bildgebenden Sensor 50 erfasst. Die Fahrzeuginsasse 59 sieht einen Außenspiegel 58 und einen Rückspiegel 51. Zum Blendschutz der Fahrzeuginsasse 59 ist ein adaptiver Blendschutz 53 vorgesehen. Die Signale des bildgebenden Sensors 50 werden von der Bildverarbeitung 52 verarbeitet, die die oben beschriebenen Daten daraus ermittelt. Diese Daten werden einem Regler 54 zugeführt, der den Blendschutz 53 in Abhängigkeit davon ansteuert. Zusätzlich berücksichtigt jedoch der Regler auch ein Modell des Kfz-Innenraums sowie Daten von einer Datenbank 56. Zusätzlich berücksichtigt der Regler 54 auch Daten von anderen Sensoren, wie einer Umfeldsensorik für den Kfz-Außenraum.

Neben diesen Daten können auch Sensoren zur Messung der Geschwindigkeit des Lenkwinkels sowie die besagten Umfeldsensoren als Datenquellen für den Regler 54 verwendet werden. Z. B. kann über die Fahrzeuggeschwindigkeit und über die Außenraumsensorik die Dynamik des Reglers angepasst werden, z. B. bei Allee- und Tunnelfahrten. Die Lenkwinkelsensierung ermöglicht eine optimale Anpassung des Blendschutzsystems bei Kurvenfahrten.

Figur 6 zeigt exemplarisch die Aktorik des Blendschutzes, als Rollo oder Jalousie 60. Die Aktorik ist entsprechend vor einer Fahrzeugscheibe 61 angeordnet. Figur 7 zeigt schematisch die Ausbildung eines elektrochromatischen Glases. Der Aufbau des Blendschutzes 70 besteht hier aus einzelnen steuerbaren Einzelelementen 71, die das elektrochromatische Glas unter elektrische Spannung versetzten können, um einzelne Bereiche unterschiedlich abzudunkeln.

## Patentansprüche

1. Blendschutzsystem für ein Fahrzeug mit einer wenigstens einen Bildgeber (11, 32, 40, 50) aufweisenden Einrichtung für die Steuerung von Blendschutzmitteln (15,35,45,82), welche die Blendschutzmittel in Abhängigkeit von einem Signal des Bildgebers (11, 32, 40) steuert, **dadurch gekennzeichnet, dass** das Signal des Bildgebers Daten über eine Kopfposition und eine Gesichtsverdeckung wenigstens eines Fahrzeuginsassen (10, 30 ,43, 59) aufweist.

2. Blendschutzsystem nach Anspruch 1, **dadurch gekennzeichnet, dass** die Daten über die Kopfposition die Position der Augen des Fahrzeuginsassen umfassen.

3. Blendschutzsystem nach einem der vorhergehenden Ansprüche, **dadurch gekennzeichnet, dass** die Daten über die Kopfposition eine Insassenklasse des wenigstens einen Fahrzeuginsassen (10, 30, 43, 59) umfassen.

4. Blendschutzsystem nach einem der vorhergehenden Ansprüche, **dadurch gekennzeichnet, dass** der wenigstens eine Bildgeber (11, 32, 40 ,50) ein Stereo-Video-Sensor für die Innenraumüberwachung des Fahrzeugs ist.

5. Blendschutzsystem nach einem der vorherigen Ansprüche, **dadurch gekennzeichnet, dass** die Einrichtung mit einem Rückhaltesystem für die Fahrzeuginsassen koppelbar ist.

6. Blendschutzsystem nach einem der vorhergehenden Ansprüche, **dadurch gekennzeichnet, dass** die Gesichtsverdeckung eine Sonnenbrille ist.

7. Blendschutzsystem nach einem der vorherigen Ansprüche, **dadurch gekennzeichnet, dass** die Einrichtung für die Erzeugung eines ersten Signals wenigstens eine Schattenkante identifiziert.

8. Blendschutzsystem nach einem der vorherigen Ansprüche, **dadurch gekennzeichnet, dass** die Einrichtung zur Erzeugung eines ersten Signals eine Lichtintensität ermittelt.

9. Blendschutzsystem nach Anspruch 7 oder 8, **dadurch gekennzeichnet, dass** die Einrichtung ein erstes Signal in Abhängigkeit von der Ansteuerung des Blendschutzes erzeugt.

10. Blendschutzsystem nach einem der vorherigen Ansprüche, **dadurch gekennzeichnet, dass** die Einrichtung in Abhängigkeit von einem ersten Signal eine Helligkeitsregelung des wenigstens einen Bildgebers vornimmt.

11. Blendschutzsystem nach einem der vorherigen Ansprüche, **dadurch gekennzeichnet, dass** die Einrichtung bei einer Ansteuerung des Blendschutzes ein Modell des Fahrzeuginnenraums berücksichtigt.

12. Blendschutzsystem nach einem der vorherigen Ansprüche, **dadurch gekennzeichnet, dass** die Einrichtung bei einer Ansteuerung des Blendschutzes ein zweites Signal von einer weiteren Sensorik berücksichtigt.

## Claims

1. Anti-dazzle system for a vehicle comprising a device having at least one image generator (11, 32, 40, 50), for controlling anti-dazzle means (15, 35, 45, 82), which device controls the anti-dazzle means as a function of a signal from the image generator (11, 32, 40), **characterized in that** the signal from the image generator has data relating to a head position and a facial covering of at least one vehicle occupant (10, 30, 43, 59).

2. Anti-dazzle system according to Claim 1,
**characterized in that** the data relating to the head position comprise the position of the eyes of the vehicle occupant.

3. Anti-dazzle system according to one of the preceding claims, **characterized in that** the data relating to the head position comprise an occupant class of the at least one vehicle occupant (10, 30, 43, 59).

4. Anti-dazzle system according to one of the preceding claims, **characterized in that** the at least one image generator (11, 32, 40, 50) is a stereo video sensor for the interior monitoring of the vehicle.

5. Anti-dazzle system according to one of the preceding claims, **characterized in that** the device can be coupled to a restraint system for the vehicle occupants.

6. Anti-dazzle system according to one of the preceding claims, **characterized in that** the facial covering is sunglasses.

7. Anti-dazzle system according to one of the preceding claims, **characterized in that** the device for generating a first signal identifies at least one shadow edge.

8. Anti-dazzle system according to one of the preceding claims, **characterized in that** the device for generating a first signal determines a light intensity.

9. Anti-dazzle system according to Claim 7 or 8, **characterized in that** the device generates a first signal as a function of the activation of the anti-dazzle protection.

10. Anti-dazzle system according to one of the preceding claims, **characterized in that** the device undertakes to control the brightness of the at least one image generator as a function of a first signal.

11. Anti-dazzle system according to one of the preceding claims, **characterized in that** the device takes account of a model of the vehicle interior when activating the anti-dazzle protection.

12. Anti-dazzle system according to one of the preceding claims, **characterized in that** the device takes account of a second signal of a further sensor system when activating the anti-dazzle protection.

## Revendications

1. Système anti-éblouissement pour un véhicule, qui présente au moins un dispositif doté d'un émetteur d'image (11, 32, 40, 50) qui commande des moyens anti-éblouissement (15, 35, 45, 82) et qui commande les moyens anti-éblouissement en fonction d'un signal de l'émetteur d'image (11, 32, 40),
**caractérisé en ce que**
le signal de l'émetteur d'image présente des données concernant la position de tête et un recouvrement du visage d'au moins un passager (10, 30, 43, 59) du véhicule.

2. Système anti-éblouissement selon la revendication 1, **caractérisé en ce que** les données concernant la position de la tête comprennent la position des yeux du passager du véhicule.

3. Système anti-éblouissement selon l'une des revendications précédentes, **caractérisé en ce que** les données concernant la position de la tête comprennent une classe de passagers du ou des passagers (10, 30, 43, 59) du véhicule.

4. Système anti-éblouissement selon l'une des revendications précédentes, **caractérisé en ce que** le ou les émetteurs d'image (11, 32, 40, 50) sont une sonde stéréo-vidéo qui surveille l'habitacle du véhicule.

5. Système anti-éblouissement selon l'une des revendications précédentes, **caractérisé en ce que** le dispositif peut être couplé à un système de retenue des passagers du véhicule.

6. Système anti-éblouissement selon l'une des revendications précédentes, **caractérisé en ce que** le recouvrement du visage est formé de lunettes solaires.

7. Système anti-éblouissement selon l'une des revendications précédentes, **caractérisé en ce que** le dispositif identifie au moins un bord de l'ombre pour former le premier signal.

8. Système anti-éblouissement selon l'une des revendications précédentes, **caractérisé en ce que** le dispositif détermine l'intensité de la lumière pour former un premier signal.

9. Système anti-éblouissement selon les revendications 7 ou 8, **caractérisé en ce que** le dispositif forme un premier signal en fonction de la commande de l'anti-éblouissement.

10. Système anti-éblouissement selon l'une des revendications précédentes, **caractérisé en ce que** le dispositif entreprend une régulation de la luminosité du ou des émetteurs d'image en fonction d'un premier signal.

11. Système anti-éblouissement selon l'une des revendications précédentes, **caractérisé en ce que** le dispositif tient compte d'un modèle de l'habitacle du véhicule lorsqu'il commande l'anti-éblouissement.

12. Système anti-éblouissement selon l'une des revendications précédentes, **caractérisé en ce que** pour commander l'anti-éblouissement, le dispositif tient compte d'un deuxième signal qui provient d'un autre ensemble de détecteurs.
